# EUROPÄISCHE PATENTSCHRIFT

(11) **EP 2 045 483 B1**
(45) Veröffentlichungstag und Bekanntmachung des Hinweises auf die Patenterteilung: **07.09.2011**
(21) Anmeldenummer: 07019545.8
(22) Anmeldetag: 05.10.2007
(51) Int. Cl.: F16D 69/04

(54) **Verfahren zum Herstellen eines Reibrings**
Method for producing a friction ring
Procédé de fabrication d'un anneau de friction

(43) Veröffentlichungstag der Anmeldung: 08.04.2009
(73) Patentinhaber: Hoerbiger Antriebstechnik GmbH, 86956 Schongau (DE)
(72) Erfinder: Fürguth, Werner, 87640 Biessenhofen/Altdorf (DE); Müller, Mathias, 87677 Stöttwang (DE); Notz, Robert, 86956 Schongau (DE)
(74) Vertreter: Kitzhofer, Thomas

(56) Entgegenhaltungen:
- EP-A- 0 521 843
- EP-A- 1 503 099
- EP-A- 1 571 361
- AU-B2- 478 611
- US-A- 4 770 283

## Beschreibung

Die Erfindung betrifft ein Verfahren zum Herstellen eines Reibrings gemäß Anspruch 1.

Organische Reibbelagmaterialien, worunter auch karbonhaltige Materialien und Gewebe oder auch sog. "Papierbeläge" zählen, werden in der Regel durch eine stoffschlüssige Verbindung, vorzugsweise durch Kleben, auf einem kegelstumpfförmigen Basiskörper eines Reibrings aufgebracht. Zur Herstellung der metallischen Basiskörper werden u.a. gestanzte Platinen zu einem Konusring umgeformt.

Das Fügen einer Reibbelagsfolie auf einem kegelstumpfförmigen Basiskörper stellt einen aufwendigen Prozess dar. Besonders das Vorfixieren der Belagabwicklung bzw. der Belagsegmente in den Konusring sowie das maßhaltige Verpressen lässt sich nur mit relativ großem Aufwand bewerkstelligen. Ein gelegentliches Verschieben der Belagfolie ist nur mit erheblichem Aufwand, wie etwa einer mechanischen Nachbearbeitung, wenn überhaupt, auszuschließen.

EP-A-1 571 361 beschreibt ein Verfahren zur Herstellung eines Konusringes, der im Betrieb ein geringes Schleppmoment erzeugen soll. Ein aus Metall zugeschnittener planer Trägerring wird mit einem Reibbelag versehen in eine konische Form umgeformt.

EP-A-0521843 offenbart einen Reibring für eine Synchronisierungsvorrichtung, der aus separaten, relativ zueinander beweglichen Segmenten besteht. Die Segmente des Ringkörpers sind durch Verbindungsbereiche miteinander verbunden und können aus metallischen Trägermaterialien mit aufgebrachten Reibwerkstoffen oder in einstückiger Ausführung ausgebildet sein. Die einzelnen mit Reibbelag versehenen planen Segmente des Ringkörpers werden durch eine Biegevorrichtung in eine endgültige konische Form umgeformt.

Es ist daher Aufgabe der vorliegenden Erfindung, ein Verfahren zum Herstellen eines Reibrings zu schaffen, dass - eine Steigerung der Wirtschaftlichkeit und eine Qualitätssteigerung der herzustellenden Reibringe aus einem konischen Basiskörper mit einem darauf aufgebrachten Reibbelag ermöglicht.

Die Lösung dieser Aufgabe erfolgt durch die Merkmale des Anspruchs 1.

Der wesentliche Vorteil dieses erfindungsgemäßen Verfahrens ist eine Vereinfachung des Montageprozesses zum Aufbringen des Reibbelages sowie eine Qualitätssteigerung des Endproduktes, da im planaren Zustand keine Belagverschiebungen auftreten können.

Die Unteransprüche haben vorteilhafte Weiterbildungen der Erfindung zum Inhalt.

Im Einzelnen ist es möglich, den Reibbelagzuschnitt in Segmente zu unterteilen, die dann auf das plane Trägerteil aufgebracht werden.

Ferner ist es auch möglich, eine einteilige Abwicklung, vorzugsweise in Form eines dem Trägerteil angepassten Reibbelagrings, zu erzeugen, die ein einteiliges Bauteil darstellt, das mit dem Trägerteil verbunden wird.

Vorzugsweise wird zur stoffschlüssigen Verbindung des Reibbelagzuschnittes mit dem Trägerteil ein Klebevorgang verwendet.

Das Trägerteil wird vorzugsweise aus einem Metallblech gestanzt, das die jeweilige erforderliche Dicke, je nach späterem Anwendungsfall, aufweist. Hierbei kann das Trägerteil mit Lappen am Innen- und/oder Außenumfang versehen werden.

Zur Oberflächenvorbehandlung ist es ferner möglich, das plane Stanzteil evtl. mit einer dünnen Sinterschicht zu versehen.

Wird zur Verbindung zwischen dem Stanzteil und dem Reibbelagzuschnitt ein Klebeverfahren verwendet, wird der Kleber vorzugsweise im planen Zustand des Verbundteils aus Reibbelag und Stanzteil ausgehärtet.

Ferner ist es erfindungsgemäß grundsätzlich möglich, lediglich eine der beiden Seiten des planen Stanzteils mit einem Reibbelagzuschnitt zu versehen oder auch beide Seiten mit einem Reibbelagzuschnitt zu verbinden, so dass der den Fertigungsendzustand bildende Konusring dann eine Innenreibfläche und eine Außenreibfläche aufweist.

Weitere Einzelheiten, Vorteile und Merkmale der vorliegenden Erfindung ergeben sich aus nachfolgender Beschreibung von Ausführungsbeispielen anhand der Zeichnung. Es zeigt:
- Fig. 1: eine Draufsicht auf ein planes Stanzteil des herzustellenden erfindungsgemäßen Reibrings,
- Fig. 2: das mit einem Reibbelag auf einer Seite versehene plane Stanzteil, und
- Fig. 3: eine perspektivische Darstellung eines gemäß dem erfindungsgemäßen Verfahren hergestellten Konusrings mit Reibbelägen auf der Innen- und Außenfläche.

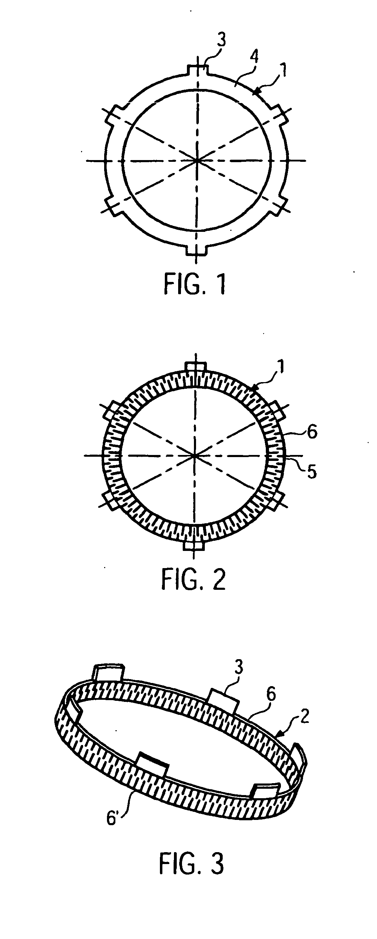

Fig. 1 zeigt ein planes Stanzteil, dass das Trägerteil bzw. Basisteil 1 eines herzustellenden Reibrings, der beispielhaft in Fig. 3 dargestellt ist und mit der Bezugsziffer 2 gekennzeichnet ist.

Das Trägerteil 1 weist im Beispielsfalle eine Mehrzahl von am Außenumfang angeordneten Lappen auf, die als Mitnahmeteile dienen und von denen einer repräsentativ für sämtliche Lappen mit der Bezugsziffer 3 bezeichnet sind. Diese Lappen können, wie in Fig. 1 dargestellt, am Außenumfang und/oder am Innenumfang vorgesehen sein.

Wie Fig. 1 zeigt, ist das Trägerteil 1 nach dem Stanzen ein planes Teil, dass zwei Flächen aufweist, von denen in Fig. 1 die Fläche 4 sichtbar ist.

Fig. 2 zeigt den Zustand, in dem das plane Stanzteil bzw. Trägerteil 1 mit einem in diesem Falle mit Nuten 5 versehenen Reibbelagzuschnitt 6 belegt ist. In diesem Zustand ist das sich daraus ergebende Verbundteil aus dem Trägerteil 1 und dem Reibbelagzuschnitt 6 nach wie vor plan. Es ist möglich, nur eine der beiden Flächen 4 mit einem Reibbelagzuschnitt 6 zu versehen oder beide Flächen mit einem derartigen Reibbelagzuschnitt zu belegen, wobei zur Verbindung vorzugsweise ein stoffschlüssiges Verfahren verwendet wird, wie beispielsweise ein Klebeverfahren.

Fig. 2 zeigt, wie gesagt, den in eine Konusform aus dem planaren Zustand umgeformten Reibring 2, der im Beispielsfalle auf seinen beiden Seiten mit einem Reibbelagzuschnitt 6 bzw. 6' versehen ist, wie dies eingangs bereits erläutert wurde.

Neben der schriftlichen Offenbarung der Erfindung wird hiermit explizit auf deren zeichnerische Darstellung in den Fig. 1 bis 3 verwiesen.

### Bezugszeichenliste

- 1: Trägerteil/Basisteil
- 2: Reibring
- 3: Lappen
- 4: Fläche
- 5: Nuten
- 6, 6': Reibbelagzuschnitte

## Patentansprüche

1. Verfahren zum Herstellen eines Reibrings (2) mit folgenden Verfahrensschritten:
- Herstellen eines Reibbelagzuschnittes (6, 6') aus organischem und/oder karbonhaltigem Reibbelagmaterial;
- Einbringen von Nuten, Einschnitten und/oder Einprägungen in das Reibbelagmaterial des Reibbelagzuschnittes zur Erzeugung einer einstellbaren Elastizität des Reibbelagzuschnittes (6, 8');
- stoffschlüssiges Verbinden des mit Nuten, Einschnitten und/oder Einprägungen versehenen Reibbelagzuschnittes (6, 6') mit einem planen Trägerteil (1) auf zumindest einer Trägerteilfläche (4); und
- Umformen des aus Trägerteil (1) und Reibbelagzuschnitt (6, 6') gebildeten Verbundteils in eine Kegelstumpfform.

2. Verfahren nach Anspruch 1, **dadurch gekennzeichnet, dass** der Reibbelagzuschnitt (6, 6') in Segmente aufgeteilt wird.

3. Verfahren nach Anspruch 1, **dadurch gekennzeichnet, dass** der Reibbelagzuschnitt als einteilige Reibbetagabwicklung hergestellt wird.

4. Verfahren nach einem der Ansprüche 1 bis 3, **dadurch gekennzeichnet, dass** als stoffschlüssiges Verfahren ein Klebeverfahren verwendet wird.

5. Verfahren nach einem der Ansprüche 1 bis 4, **dadurch gekennzeichnet, dass** das Trägerteil (1) aus einem Metallblech gestanzt wird.

6. Verfahren nach einem der Ansprüche 1 bis 5, **dadurch gekennzeichnet, dass** das Trägerteil (1) mit einer dünnen Sinterschicht als Oberflächenvorbehandlung versehen wird.

7. Verfahren nach einem der Ansprüche 1 bis 6, **dadurch gekennzeichnet, dass** auf beide Flächen (4) des Trägerteils (1) ein Reibbelagzuschnitt (6, 6') aufgebracht wird.

## Claims

1. A method of manufacturing a friction ring (2), comprising the following method steps:
- manufacturing a friction lining blank (6, 6') from an organic and/or a carbon-containing friction lining material;
- applying grooves, incisions and/or embossings into the friction lining material of the friction lining blank for producing an adjustable elasticity of the friction lining blank (6, 6');
- connecting, by an intermaterial bond, the friction lining blank (6, 6') provided with grooves, incisions and/or embossings to a planar carrier part (1) on at least one carrier part surface (4); and
- reshaping the composite part formed from the carrier part (1) and the friction lining blank (6, 6') into a truncated cone shape.

2. The method according to claim 1, **characterized in that** the friction lining blank (6, 6') is divided up into segments.

3. The method according to claim 1, **characterized in that** the friction lining blank is manufactured as a one-piece friction lining development.

4. The method according to any of claims 1 to 3, **characterized in that** an adhesive bonding method is used as the intermaterial bonding method.

5. The method according to any of claims 1 to 4, **characterized in that** the carrier part (1) is stamped from a metal sheet.

6. The method according to any of claims 1 to 5, **characterized in that** the carrier part (1) is provided with a thin sintered layer as a surface pretreatment.

7. The method according to any of claims 1 to 6, **characterized in that** a friction lining blank (6, 6') is applied onto both surfaces (4) of the carrier part (1).

## Revendications

1. Procédé de fabrication d'une bague de friction (2), présentant les étapes de procédé suivantes :
- fabriquer une découpe de garniture de friction (6, 6') en matériau de garniture de friction organique et/ou contenant du carbone ;
- ménager des rainures, des entailles et/ou des gaufrages dans le matériau de garniture de friction pour produire une élasticité réglable de la découpe de garniture de friction (6, 6') ;
- relier par coopération de matière la découpe de garniture de friction (6, 6') pourvue de rainures, d'entailles et/ou de gaufrages avec un support plan (1) sur au moins une surface partielle de support (4) ; et
- façonner l'élément composite formé par le support (1) et la découpe de garniture de friction (6, 6') dans une forme tronconique.

2. Procédé selon la revendication 1, **caractérisé en ce que** la découpe de garniture de friction (6, 6') est divisée en segments.

3. Procédé selon la revendication 1, **caractérisé en ce que** la découpe de garniture de friction est fabriquée en tant que réalisation de garniture de friction d'une seule pièce.

4. Procédé selon l'une des revendications 1 à 3, **caractérisé en ce qu'**on utilise en tant que procédé de coopération de matières un procédé de collage.

5. Procédé selon l'une des revendications 1 à 4, **caractérisé en ce que** le support (1) est estampé depuis une tôle métallique.

6. Procédé selon l'une des revendications 1 à 5, **caractérisé en ce que** le support (1) est pourvu d'une couche frittée mince servant de traitement préliminaire de surface.

7. Procédé selon l'une des revendications 1 à 6, **caractérisé en ce qu'**une découpe de garniture de friction (6, 6') est appliquée sur les deux faces (4) du support (1).
